# FASCICULE DE BREVET EUROPEEN

(11) **EP 1 972 092 B1**
(45) Date de publication et mention de la délivrance du brevet: **10.04.2013**
(21) Numéro de dépôt: 07717914.1
(22) Date de dépôt: 08.01.2007
(51) Int. Cl.: H04L 12/18

(54) **PROCEDE ET SYSTEME DE DISTRIBUTION DE CONTENU MULTIMEDIA**
VERFAHREN UND SYSTEM ZUR MULTIMEDIALEN INHALTSLIEFERUNG
MULTIMEDIA CONTENT DELIVERY METHOD AND SYSTEM

(30) Priorité: 09.01.2006 FR 0650073; 05.09.2006 FR 0653577
(43) Date de publication de la demande: 24.09.2008
(73) Titulaire: Thomson Licensing, Inc., 92100 Boulogne-Billancourt (FR)
(72) Inventeur: DIOT, Christophe, F-06230 Villefranche Sur Mer (FR); CHAINTREAU, Augustin, F-75010 Paris (FR); SOULE, Augustin, F-75015 Paris (FR); NEUMANN, Christoph, F-35700 Rennes (FR); BOUDANI, Ali, F-35000 Rennes (FR); SUH, Kyoungwon, F-92648 Boulogne Cedex (FR); HOUEIX, Pierre, F-35510 Cesson-sévigné (FR); CHAMPEL, Mary-Luc, F-35220 Marpiré (FR)
(74) Mandataire: Ruellan-Lemonnier, Brigitte
(86) Numéro de dépôt international: PCT/FR2007/050622
(87) Numéro de publication internationale: WO 2007/080345

(56) Documents cités:
- EP-A- 1 338 989
- EP-A- 1 341 328
- US-A1- 2004 003 090

## Description

### Domaine de l'invention

La présente invention se rapporte au domaine des technologies de l'information et de la communication.

La présente invention se rapporte plus particulièrement à procédé et à un système de distribution de contenu multimédia combinant un téléchargement en mode « *push* » et un téléchargement en mode *« pull »* au travers d'un mécanisme de *« peer to peer* ».

### Etat de la technique

L'art antérieur connaît déjà, par la publication scientifique « On the feasibility of Commercial, Legal P2P Content Distribution » (P. Rodriguez, S-M. Tan et C. Gkantsidis, ACM SIGCOMM Computer Communication Review, vol. 36, N°1, janvier 2006), le concept de la distribution de contenu multimédia via des réseaux *« peer to peer »* à des fins commerciales. Toutefois, cette publication scientifique ne divulgue pas d'étape de téléchargement en mode « *pull* ».

L'art antérieur connaît également, par la demande de brevet européen EP 1 341 328 (Matsushita Electric Industrial Co.), un système de diffusion de données, pour la diffusion de données multimédia et un dispositif terminal récepteur pour recevoir lesdites données multimédia. L'invention décrite dans cette demande de brevet européen se rapporte à un dispositif récepteur de données pour recevoir et émettre des données de *broadcast* comportant une pluralité de données multimédia, le dispositif comprenant :
- une unité de réception adaptée pour recevoir de façon séquentielle la pluralité de données multimédia incluses dans les données broadcast ;
- une unité d'émission adaptée pour émettre les données reçues ;
- une unité de stockage adaptée pour créer et stocker des informations de gestion pour gérer de façon collective la pluralité des données multimédia reçues et attribuer des informations correspondant à des données multimédia respectives ; et
- une unité de gestion adaptée pour gérer les données multimédia reçues en référence aux informations de gestion.

L'art antérieur connaît également, par la demande de brevet américain US 2004/003090 (Deeds Douglas), un système de partage d'informations en *peer to peer.* Cette demande de brevet américain décrit un système et un procédé pour partager des données à travers un réseau tel qu'Internet. Les données partagées seront souvent des données audio, mais peuvent correspondre à d'autres types de données. Un serveur, par un exemple un serveur de messagerie instantanée en communication avec le réseau reçoit des requêtes pour initier des sessions de partage de données, les requêtes comportant les adresses des participants potentiels. A réception de la requête, le serveur de messagerie instantanée détermine si des participants potentiels sont, en fait, connectés au réseau et, si tel est le cas, transmet leur adresse réseau à l'entité qui a émis la requête de telle sorte qu'il puisse commencer à transmettre les données à chacun d'entre eux. Les données sont habituellement jouée à partir d'un enregistrement par un des participants, mais la sélection est entendue par les membres du groupe lorsque elle est transmise, créant un environnement d'écoute partagée. Afin d'éviter de potentiels contrefaçons de droits d'auteur, les données sont jouées mais ne sont pas stockées pour une écoute ultérieur au niveau des terminaux récepteurs.

L'art antérieur connaît également, par la demande de brevet PCT WO 01/10125 (Randall Chung), un système de vidéo à la demande (VoD ou *Video on Demand*), à partir d'un serveur ou d'un utilisateur vers un autre utilisateur. Cette demande de brevet PCT décrit un système et un procédé pour distribuer des données à de multiples utilisateurs finaux en utilisant un système de stockage connecté à travers un réseau de communication de données. L'équipement de l'utilisateur final pour jouer de l'audio ou de la vidéo ou pour l'enregistrement contient une unité de stockage, comme par exemple un disque magnétique. Chaque unité de stockage peut stocker des données, comme du contenu vidéo numérique (des films) ou du contenu audio numérique (des chansons). L'unité de stockage peut aussi être configurée pour stocker des parties, ou fragments, de contenu numérique vidéo ou audio. Le lieu de stockage, la lecture et l'enregistrement de contenu numérique vidéo ou audio sont administrés, gérés et contrôlés par une entité centrale. Les données pour la lecture de contenu vidéo ou audio, ou des parties de ces données, peuvent résider sur une ou plusieurs unité(s) de stockage physiquement distincte(s), ou peuvent résider sur unité de stockage centrale.

### Exposé de l'invention

La présente invention entend remédier aux inconvénients de l'art antérieur en proposant une solution d'encodage particulièrement adaptée à une méthode de distribution de contenus multimédia qui combine les modes *« push », « pull »* et *« peer to peer* ».

A cet effet, la présente invention concerne, dans son acception la plus générale, un procédé de distribution de contenu multimédia, caractérisé en ce qu'il comprend :
● une première étape consistant à télécharger en mode *« push »* un contenu multimédia de façon partielle depuis un serveur de contenu sur un premier équipement client et
● une seconde étape consistant à télécharger les éléments manquants dudit contenu multimédia en mode « *pull »* par un mécanisme de *« peer* to *peer »* depuis un second équipement client ;
le contenu multimédia étant reconstituable avec n + p blocs, n et p étant entiers naturels non nuls, n blocs étant téléchargés lors de ladite première étape et p blocs étant téléchargés lors de la seconde étape, le contenu multimédia n'étant exploitable qu'après la réception des n + p blocs

Selon une première variante, les premier et second équipements clients et sont situés sous un même DSLAM (pour 'Multiplexeur de Ligne d'Abonné Numérique') dans le cadre d'une implémentation basée sur ce mode de transmission.

Selon une seconde variante, les équipements clients sont situés sous des DSLAMs voisins.

Les équipements clients peuvent être des décodeurs à disque dur ou des ordinateurs personnels.

Selon un mode de mise en oeuvre particulier, certains blocs sont systématiquement chargés chez plusieurs équipements clients, par exemple des blocs permettant de visualiser le début d'un film ou un film avec une qualité dégradée, pour qu'un utilisateur puisse commencer à visionner en attendant que le chargement par un mécanisme « *Peer to Peer »* ait lieu.

L'invention se rapporte également à un système de distribution d'un contenu multimédia comprenant au moins un serveur de contenu multimédia, un réseau de communication, un DSLAM et au moins deux équipements clients.

La présente invention se rapporte également à un équipement numérique, caractérisé en ce qu'il comprend :
● des moyens pour recevoir par téléchargement en mode *« push »* un contenu multimédia de façon partielle depuis un serveur de contenu ; et
● des moyens pour recevoir par téléchargement les éléments manquants dudit contenu multimédia en mode « *pull* ». par un mécanisme de *« peer to peer »* depuis un second équipement client;
et en ce que le contenu multimédia est reconstituable avec n + p blocs, n et p étant entiers naturels non nuls, n blocs étant téléchargés en mode « *push »* et p blocs étant téléchargés en mode « *pull »* par un mécanisme de *« peer* to *peer* », le contenu multimédia n'étant exploitable qu'après la réception des n + p blocs.

### Brève description des dessins

On comprendra mieux l'invention à l'aide de la description, faite ci-après à titre purement explicatif, d'un mode de réalisation de l'invention, en référence à la Figure unique qui illustre une architecture mettant en oeuvre le procédé et le système selon la présente invention.

### Description détaillée des modes de réalisation de l'invention

Tout d'abord, un contenu multimédia est encodé en N blocs, N étant un entier naturel supérieur ou égal à 2. Le contenu peut-être décodé à l'aide de n + p blocs.

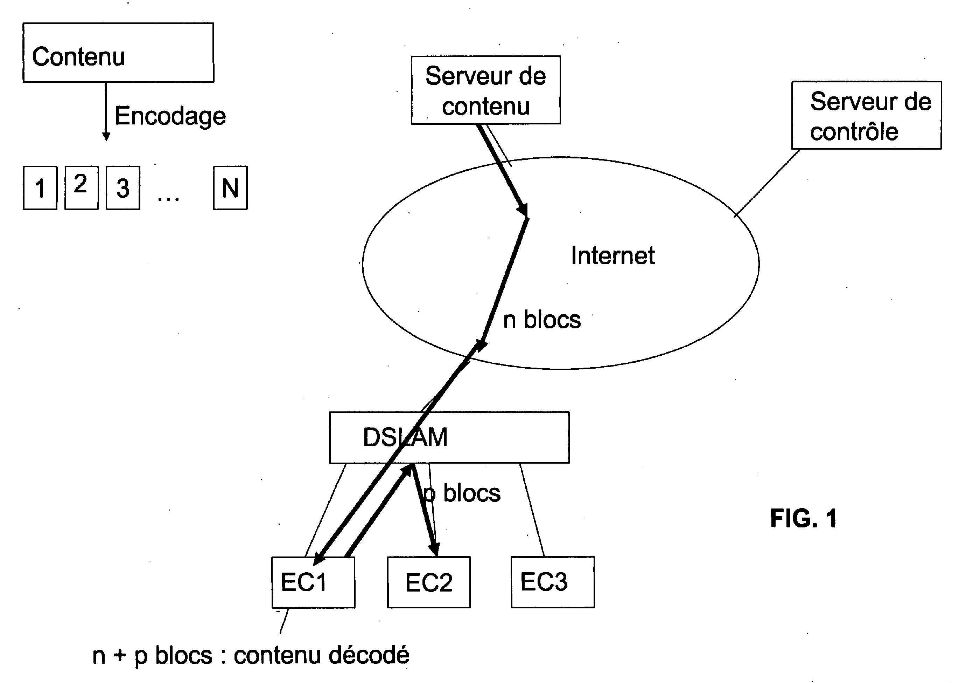

Le contenu multimédia est par exemple un document vidéo et le système de la figure 1 se place dans le cadre de la télévision à la demande ('VOD' pour 'Video on Demand').

Le contenu est ensuite téléchargé en mode *« push »* depuis un serveur de contenu, illustré sur la Figure unique, à travers un réseau de communication, vers des équipements clients EC1, EC2, EC3 etc. Chaque équipement client reçoit n blocs. Un équipement client est un décodeur à disque dur ou un ordinateur personnel, et est connecté au réseau de communication via un modem DSL et un équipement DSLAM. Chaque équipement client stocke les n blocs pour une utilisation ultérieure (par exemple sur le disque dur). Le décodeur ou l'ordinateur comprennent des moyens en soi connus pour décoder et décompresser le cas échéant le contenu, et dans la mesure où il s'agit d'un contenu vidéo, de générer les signaux vidéo et audio dans un format adéquat.

Les n blocs transmis à ('poussés vers') un équipement client donné sont déterminés par le serveur de contenu. De préférence, les n blocs transmis à un équipement client diffèrent des n blocs transmis à un autre équipement client par au moins un bloc. Le serveur de contenu maintient une base de données qui indique quels blocs sont stockés au niveau de chaque équipement client. Cette base de données permettra à un équipement client de déterminer auprès de quel(s) équipement(s) client(s) pair(s) demander les p blocs manquants. Avantageusement, cette base de données est stockée dans un équipement autre que le serveur de contenu mais accessible par les équipements clients.

Selon une variante particulière, le contenu multimédia est encodé de telle sorte que toute combinaison de n + p blocs permette de décoder le contenu. Dans ce cas, l'équipement client va chercher les p blocs manquants sur n'importe quel autre équipement client possédant ces p blocs complémentaires.

Dans notre exemple, il y a trois équipements clients, de préférence situés sous le même DSLAM, n est égal à 3, p est égal à 1 et N est égal à 9. Les blocs sont codés avec une certaine redondance inter-blocs. Le choix de p petit (et notamment égal à 1) permet de minimiser la quantité d'informations à requérir en mode peer to peer et ainsi d'accélérer l'accès au contenu par l'utilisateur. Cette requête peut être effectuée au moment où l'utilisateur souhaite visualiser le contenu, ou lorsqu'il décide d'acquérir un droit sur le contenu.

Chacun des trois équipements clients reçoit donc en mode « push » trois blocs. Afin de pouvoir exploiter le contenu multimédia, chaque équipement client a besoin d'un bloc supplémentaire.

Un équipement client va donc télécharger en mode *« pull »* depuis un autre équipement client le bloc manquant via un mécanisme de *« peer to peer »* ('pair à pair'). Cet équipement va donc demander les blocs manquants. Ainsi, l'équipement client pourra décoder le contenu et l'exploiter.

Le mode peer to peer permet d'éviter d'impliquer un chargement des blocs manquants à partir du serveur initial. Ce mode permet également d'optimiser les ressources réseau et de ne pas trop solliciter le serveur de contenu.

Les p blocs manquants peuvent être distribués sur plusieurs équipements sous le DSLAM.

Une demande de recherche est envoyée d'un équipement client EC1 vers les équipements présents dans une liste dans laquelle apparaissent les équipements qui contiennent le reste du contenu. Cette liste peut avoir été envoyée au préalable par un serveur de contrôle, sur requête de l'équipement client EC1.

Par exemple, EC1 envoie une requête à EC3, EC5 et ECn. EC3 envoie un tiers du contenu manquant à EC1, EC5 envoie le second tiers du contenu manquant à EC1 et ECn envoie le derniers tiers à EC1. On peut également imaginer un mode dans lequel les proportions transmises par EC3, EC5 et ECn à EC1 ne sont pas égales, par exemple, 55 %, 30 % et 15 %.

Un message peut être envoyé au serveur de contrôle lorsqu'une certaine partie du contenu est jugé valide par l'équipement EC1.

On peut également imaginer qu'une priorité soit établie pour la fourniture des blocs manquants. Par exemple, en mode SVC *(Scalable Video Coding),* la couche de base aurait la plus haute priorité tandis que la couche dite *« enhancement layer »* aurait une priorité plus basse. Le contenu pourrait être joué avec une partie seulement des blocs manquants, mais avec une qualité plus faible.

Ce mécanisme de priorité peut être particulièrement intéressant pour des applications possédant de fortes contraintes de temps *(time critical applications).* Par exemple, supposons que l'équipement client EC1 peut tolérer l'absence des premiers et seconds tiers de contenu manquant, mais a besoin du dernier tiers. Dans ce cas, EC1 enverra aux équipements qui possèdent le contenu une indication de priorité qui permettra de respecter la contrainte temporelle.

Une variante du procédé consiste en la division du contenu manquant qui a de fortes contraintes temporelles en plusieurs parties, de tailles égales ou non. Ces parties seront ensuite transmises à l'équipement client qui en fait la demande.

L'étape de *« push »* peut être réalisée à travers un réseau de diffusion numérique conforme à une des normes DVB, par exemple DVB-T ou DVB-H.

Dans le cadre de la présente invention, les mécanismes *d'unicast* et de *multicast* peuvent être utilisés.

Dans un mode de réalisation particulier, on peut procéder de la façon suivants :
i) Le serveur de contenu envoie le contenu dans son intégralité seulement une fois en utilisant la technique du multicast.
ii) Le serveur de contrôle envoie des informations spécifiques à chacun des équipements clients afin de leur indiquer quelle partie du contenu ils doivent sauvegarder et quelle partie du contenu ils peuvent supprimer.
L'avantage d'un tel mécanisme est la faible utilisation de bande passante. L'inconvénient majeur est que les équipements clients doivent être connectés pendant la phase en mode *push.* Pour les équipements qui ne seraient pas disponibles pendant cette phase en mode *push,* il est possible de transmettre le contenu du serveur de contenu vers ces équipements clients en unicast.

Pendant la phase en mode *pull,* on peut également utiliser le multicast. En effet, une connexion multicast peut être utilisée de sorte que l'équipement EC1 puisse bénéficier de l'équipement EC2 qui fournit déjà du contenu à l'équipement EC3.

La principale différence avec l'approche unicast est qu'une fois que le serveur de contrôle reçoit une requête concernant un contenu de la part d'un équipement client, le serveur de contrôle initie deux activons :
i) L'envoi d'une réponse à l'équipement qui a fait la requête lui disant « d'écouter » sur une ou plusieurs adresse(s) /port(s) multicast spécifique(s).
ii) L'envoi d'une requête de commande à un ou plusieurs équipement(s) qui contiennent le contenu demandé de façon à ce qu'ils commencent à diffuser le contenu sur une connexion multicast, dont l'adresse/port est contenu(e) dans la requête. Le serveur peut en outre spécifier si le contenu est diffusé en multicast en mode carrousel ou seulement en une fois.

Dans le cas où le serveur de contrôle détecte que le contenu demandé est déjà distribué (ou en train d'être distribué) par un ou plusieurs équipements, le serveur de contrôle n'a pas besoin d'envoyer de requête de commande aux équipements diffuseurs. Le DSLAM, grâce aux mécanismes IGMP prendra soin de fournir le contenu demandé à l'équipement qui en a effectué la requête.

De plus, comme un équipement demandeur de contenu peut "écouter" plusieurs connexions multicast, un second mécanisme est nécessaire de sorte que l'équipement demandeur de contenu puisse envoyer un message au serveur de contrôle lorsqu'il a terminé de télécharger le contenu. A ce moment, comme le serveur de contrôle sait combien d'équipements écoutent le contenu demandé, il peut (ou pas) envoyer une requête de commande à l'équipement diffuseur pour lui dire d'arrêter d'émettre. Bien évidemment, cette requête ne sera émise uniquement lorsque plus aucun équipement n'écoutera la connexion multicast.

Une variante consiste à découper du contenu partagé en plusieurs parties. Plus les parties sont grandes, plus il est probable que plusieurs équipements écoutent les mêmes parties. Plus les parties sont petites, plus le nombre d'équipements diffuseurs qui contribuent au même contenu sera élevé, ce qui conduirait probablement à un téléchargement plus rapide et à un temps plus court d'émission pour les équipements diffuseurs.

Dans une autre variante, un codage redondant est introduit de sorte que plus d'équipements récepteurs puissent écouter les mêmes liens multicast. Par exemple, pour décoder un contenu, seule une partie du contenu codé a besoin d'être reçu. Ce codage peut être systématique ou non.

Dans un autre mode de réalisation de l'invention, le serveur de contrôle peut envoyer, en réponse à une requête, la liste de tous les équipements qui diffusent le contenu demandé. L'équipement récepteur choisit combien de flux il souhaite écouter. L'équipement récepteur peut utiliser au mieux la bande passante disponible. Les équipements récepteurs envoient un message spécifique au serveur pour lui indiquer quel flux il écoute. Ceci permet au serveur de savoir combien d'équipements écoutent un équipement diffuseur donné.

Différentes stratégies peuvent être mises en oeuvre pour la première étape en mode « *push »*
*a) Multiplexed versus Dedicated Push*
*b) Full Copies versus Partial Copies Push*
*c) Prefix Push*
d) *Global Earliest Deadline First Policy*

### Multiplexed versus Dedicated Push

Les deux premières stratégies de placement de contenu concernent le nombre d'équipements clients alloués à un contenu donné, par exemple un film donné.

Allouer un client à un film signifie que des parties du film ou le film dans son intégralité sont/est stocké(s) au niveau du client, et que ce contenu peut être transmis à d'autres clients.

Une première stratégie, dite stratégie multiplex *(multiplex strategy),* consiste à allouer un grand nombre de clients à un film donné. Une seconde stratégie, dite stratégie dédiée *(dedicated strategy)* consiste à allouer un petit nombre de clients à un film donné. Le cas extrême de la stratégie dédiée est de transmettre le contenu à un seul client, tandis que le cas extrême de la stratégie multiplex est de transmettre le contenu à tous les clients.

Dans le cas de la stratégie multiplex, le nombre de serveurs potentiels est augmenté, ce qui entraîne, dans l'hypothèse d'un canal filaire, que la bande passante allouée pour un contenu donné augmente de façon linéaire avec le nombre de clients alloués au contenu.

Les effets du choix *multiplex vs. dedicated* sont les suivants :
- L'augmentation du nombre de clients alloués pour un film donné augmente le taux dit *supported arrival rate* pour ce film. Cette augmentation augmente également la latence de démarrage *(startup latency)* mais de façon moindre.
- Dans le cas extrême où le contenu est transmis à tous les clients (full multiplex), nous devons également considérer que chaque client a déjà des parties du contenu et n'a donc plus qu'à télécharger la partie restante. Ainsi, dans ce cas, la quantité de trafic dans le réseau est réduite.

Ainsi, il est recommandé d'augmenter le degré de multiplex pour les films populaires et d'utiliser des stratégies plus dédiées pour les films moins populaires.

### Full Copies versus Partial Copies Push

Les stratégies de placement de contenu suivantes concernent la quantité de données stockée au niveau d'un seul client alloué pour un film donné. C'est la quantité de données que l'équipement client fournira en tant que serveur à d'autres clients demandant le contenu. Un équipement (client-)serveur peut stocker le film en entier ou bien de façon partielle.

Les effets lies à ces stratégies sont les suivants :
- Pour le même nombre de clients alloués, l'augmentation de la quantité de contenu stockée au niveau de chaque client réduit le paramètre appelé *startup latency* d'un film. Toutefois, il convient de noter que l'augmentation du nombre de clients alloués a plus d'effet sur le paramètre appelé *startup latency* que l'augmentation de la quantité de stockage.
- Pour le même nombre de clients allouées, l'augmentation de la quantité stockée au niveau de chaque client a très peu d'impact sur le taux dit *supported arrival rate.*
- La réduction de la quantité de stockage au niveau de chaque client augmente *l'overhead* généré pour ce film spécifique. Plus précisément, un client doit contacter plus d'autres clients afin de télécharger le contenu, ce qui augmente ainsi la complexité de la signalisation et augmente le nombre de connexions TCP au niveau de chaque client.

### Prefix Push:

Cette stratégie consiste en la transmission en mode *push* des premières secondes ou minutes d'un contenu donné à tous les clients. Ces données ne sont pas utilisées par un client alloué pour transmettre en tant que serveur les autres clients demandeurs de contenu. Cela réduit considérablement le paramètre dit *startup-latency.* Cette stratégie doit seulement être utilisée pour des films très populaires. En effet, transmettre en mode *push* le préfixe à tous les clients lorsque le film n'est regardé que par un très petit nombre de clients peut être considéré comme un gâchis de capacités de stockage.

En fonction de la popularité d'un film, différentes stratégies de *push* doivent être mises en oeuvre afin d'optimiser l'utilisation des ressources (bande passante, stockage, clients etc.).

Il est recommandés de suivre les étapes suivantes :
a) Dans un premier temps, déterminer le nombre de clients alloués à chaque film : choisir entre push multiplex et push dédié. Il convient d'augmenter le multiplexage pour les films populaires, de sorte que des taux d'arrivée *(arrival rates)* élevés soient supportés pour ces films. Dans le même temps, afin de minimiser l'overhead et la consommation de capacités de stockage, il conviendra de réduire le multiplexage pour les films moins populaires.
b) Ensuite, il conviendra de déterminer la quantité de stockage alloué à chaque film au niveau de chaque client : il est recommandé d'augmenter le stockage pour les films populaires afin de faire diminuer la quantité totale d'overhead générée par le système. Il est en outre recommandé de réduire la quantité de stockage pour les films moins populaires, car l'impact sur l'overhead total serait faible et cet espace de stockage serait mieux utilisé par des films populaires.
c) Finalement, l'utilisation du reste de l'espace de stockage disponible pour la stratégie de push de préfixes permet d'adapter la latence de démarrage *(startup latency)* de chaque film. Il est recommandé d'appliquer cette règle uniquement pour les films les plus populaires.

### Global Earliest Deadline First Policy

Cette dernière stratégie est utilisée en conjonction avec les précédentes.

« La première deadline en premier » ou *«earliest deadline first »* est une politique dans laquelle la requête avec la deadline la plus proche doit être servie avant toutes les autres requêtes. Ceci est trivial avec un seul serveur de contenu qui doit traiter toutes les requêtes, car le serveur de contenu a connaissance des requêtes et de leurs deadlines. Cependant, dans un environnement distribué, comme celui de l'invention, l'implémentation d'une politique globale de la deadline le plus tôt en premier *(global earliest deadline first policy),* dans laquelle la requête de la deadline le plus tôt doit être traitée avant toutes les autres requêtes qui sont dans les files des équipements serveurs, n'est pas triviale. Les requêtes peuvent être distribuées sur plusieurs équipements serveurs et le système doit identifier et servir celle qui est arrivée le plus tôt.

En supposant la présence d'un serveur de contrôle central qui a un index de tout le contenu transmis pendant l'étape en mode *push* et de son emplacement et qui reçoit des requêtes de clients, la politique dite *«earliest deadline first »* peut être implémentée eu niveau du serveur de contrôle. Cette politique serait globale car toutes les requêtes de tous les clients ont été prises en compte.

Supposons maintenant que chaque équipement client possède un index de tout le contenu et de son emplacement. Afin de distribuer la consommation de ressources, un client choisit de façon aléatoire l'emplacement à partir duquel il télécharge le contenu qu'il souhaiterait utiliser. En supposant la présence du serveur central de contrôle, qui n'a cependant pas l'index de tout le contenu et de son emplacement, une politique dite *« global earliest deadline first »* peut être implémentée comme ceci : chaque équipement serveur doit informer le serveur de contrôle de sa file d'attente. Le serveur central planifie toutes les requêtes en fonction de la politique dite « *earliest deadline first »* et envoie la liste aux clients.

L'invention est décrite dans ce qui précède à titre d'exemple. Il est entendu que l'homme du métier est à même de réaliser différentes variantes de l'invention sans pour autant sortir du cadre du brevet. Notamment, l'exemple de réalisation se place dans le cadre d'une transmission par le réseau téléphonique et par ligne numérique abonné asynchrone ('ADSL'). D'autres réseaux et modes de transmission peuvent être envisagés.

## Revendications

1. Procédé de distribution de contenu multimédia, **caractérisé en ce qu'**il comprend :
● une première étape consistant à télécharger en mode « *push »* un contenu multimédia de façon partielle depuis un serveur de contenu sur un premier équipement client (EC1) et
● une seconde étape consistant à télécharger les éléments manquants dudit contenu multimédia en mode « *pull »* par un mécanisme de *« peer* to *peer »* depuis un second équipement client (EC2) ;
et **en ce que** le contenu multimédia est reconstituable avec n + p blocs, n et p étant entiers naturels non nuls, n blocs étant téléchargés lors de ladite première étape et p blocs étant téléchargés lors de la seconde étape, le contenu multimédia n'étant exploitable qu'après la réception des n + p blocs.

2. Procédé de distribution d'un contenu multimédia selon la revendication 1 **caractérisé en ce que** les premiers et seconds équipements clients (EC1, EC2) sont situés sous un même DSLAM.

3. Procédé de distribution d'un contenu multimédia selon la revendication 1 **caractérisé en ce que** les premiers et seconds équipements clients (EC1, EC2) sont situés sous des DSLAMs voisins.

4. Procédé de distribution d'un contenu multimédia selon l'une au moins des revendications 1 à 3 **caractérisé en ce qu'**au moins l'un des premier et second équipement client (EC1, EC2) est un décodeur à disque dur ou un ordinateur personnel.

5. Procédé de distribution d'un contenu multimédia selon la revendication 1 **caractérisé en ce que** certains blocs sont systématiquement chargés chez plusieurs équipements clients, par exemple des blocs permettant de visualiser le début d'un film ou un film avec une qualité dégradée, pour qu'un utilisateur puisse commencer à visionner en attendant que le chargement par un mécanisme « *Peer* to *Peer »* ait lieu.

6. Système de distribution d'un contenu multimédia comprenant au moins un serveur de contenu multimédia, un réseau de communication, un DSLAM et au moins deux équipements clients pour la mise en oeuvre de toutes les étapes du procédé selon l'une au moins des revendications 1 à 5.

7. Equipement numérique, **caractérisé en ce qu'**il comprend :
● des moyens pour recevoir par téléchargement en mode « *push* » un contenu multimédia de façon partielle depuis un serveur de contenu ; et
● des moyens pour recevoir par téléchargement les éléments manquants dudit contenu multimédia en mode « *pull »* par un mécanisme de *« peer* to *peer »* depuis un second équipement client;
et **en ce que** le contenu multimédia est reconstituable avec n + p blocs, n et p étant entiers naturels non nuls, n blocs étant téléchargés en mode « *push »* et p blocs étant téléchargés en mode « *pull »* par un mécanisme de *« peer to peer* », le contenu multimédia n'étant exploitable qu'après la réception des n + p blocs.

## Claims

1. Method for distributing multimedia content, **characterized in that** it comprises:
● a first step comprising a download in "push" mode of a multimedia content, in a partial way, from a content server to a first client device (EC1), and
● a second step comprising a download of the missing elements of said multimedia content in "pull" mode via a "peer to peer" mechanism from a second client device (EC2),
and **in that** the multimedia content can be reconstituted with n + p blocks, n and p being non-null natural integers, n blocks being downloaded during said first step and p blocks being downloaded during the second step, the multimedia content being exploitable only after reception of the n + p blocks.

2. Method for distributing multimedia content according to claim 1, **characterized in that** the first and second client devices (EC1, EC2) are located under the same DSLAM.

3. Method for distributing multimedia content according to claim 1, **characterized in that** the first and second client devices (EC1, EC2) are located under neighbouring DSLAMs.

4. Method for distributing multimedia content according to at least one of claims 1 to 3, **characterized in that** at least one of the first and second client devices (EC1, EC2) is a set-top box with a a hard disk or a personal computer.

5. Method for distributing multimedia content according to claim 1, **characterized in that** certain blocks are systematically loaded onto several client devices, for example blocks enabling viewing of the start of a film or a film of a degraded quality, so that a user can begin viewing while waiting for the loading by a "Peer to Peer" mechanism to happen.

6. System for the distribution of multimedia content comprising at least a multimedia content server, a communication network, a DSLAM and at least two client devices for the implementation of all the steps of the method according to at least one of the claims 1 to 5.

7. Digital device, **characterized in that** it comprises:
● means for receiving by download in "push" mode a multimedia content, in a partial way, from a content server, and
● means for receiving by download the missing elements of said multimedia content in "pull" mode via a "peer to peer" mechanism from a second client device, and **in that** the multimedia content can be reconstituted with n + p blocks, n and p being non-null natural integers, n blocks being downloaded in "push" mode and p blocks being downloaded in "pull " mode, by a "peer to peer" mechanism, the multimedia content being usable only after the reception of the n + p blocks.

## Patentansprüche

1. Verfahren zur Verteilung eines multimedialen Inhaltes, **dadurch gekennzeichnet, dass** es folgende Schritte umfasst:
- einen ersten Schritt, der darin besteht, einen multimedialen Inhalt teilweise von einem Inhaltsserver auf eine erste Client-Einrichtung (EC1) im Push-Modus herunterzuladen und
- einen zweiten Schritt, der darin besteht, die fehlenden Elemente des multimedialen Inhalts durch einen Peer-to-Peer-Mechanismus von einer zweiten Client-Einrichtung (EC2) im Pull-Modus herunterzuladen,
und dass der multimediale Inhalt mit n + p Blöcken wiederhergestellt werden kann, wobei n und p natürliche Ganzzahlen ungleich Null sind, wobei n Blöcke bei dem ersten Schritt heruntergeladen werden und p Blöcke bei dem zweiten Schritt heruntergeladen werden, wobei der multimediale Inhalt erst nach Empfang der n + p Blöcke verwertet werden kann.

2. Verfahren zur Verteilung eines multimedialen Inhalts nach Anspruch 1, **dadurch gekennzeichnet, dass** die erste und zweite Client-Einrichtung (EC1, EC2) auf ein und denselben DSLAM aufgeschaltet sind.

3. Verfahren zur Verteilung eines multimedialen Inhalts nach Anspruch 1, **dadurch gekennzeichnet, dass** die erste und zweite Client-Einrichtung (EC1, EC2) auf benachbarte DSLAMs aufgeschaltet sind.

4. Verfahren zur Verteilung eines multimedialen Inhalts nach mindestens einem der Ansprüche 1 bis 3, **dadurch gekennzeichnet, dass** mindestens eine der ersten und zweiten Client-Einrichtungen (EC1, EC2) ein Decoder mit Festplatte oder ein Personal Computer ist.

5. Verfahren zur Verteilung eines multimedialen Inhalts nach Anspruch 1, **dadurch gekennzeichnet, dass** manche Blöcke systematisch auf mehrere Client-Einrichtungen geladen werden, beispielsweise Blöcke, die es ermöglichen, den Anfang eines Films oder einen Film mit verminderter Qualität anzuzeigen, damit ein Benutzer mit dem Ansehen beginnen kann, bis das Laden durch einen Peer-to-Peer-Mechanismus einsetzt.

6. System zur Verteilung eines multimedialen Inhalts mit mindestens einem Server mit multimedialem Inhalt, einem Kommunikationsnetzwerk, einem DSLAM und mindestens zwei Client-Einrichtungen für die Umsetzung aller Schritte des Verfahrens nach mindestens einem der Ansprüche 1 bis 5.

7. Digitale Einrichtung, **dadurch gekennzeichnet, dass** sie Folgendes umfasst:
- Mittel, um durch Herunterladen im Push-Modus einen multimedialen Inhalt teilweise von einem Inhaltsserver zu empfangen und
- Mittel, um durch Herunterladen im Pull-Modus die fehlenden Elemente des multimedialen Inhalts durch einen Peer-to-Peer-Mechanismus von einer zweiten Client-Einrichtung zu empfangen,
und dass der multimediale Inhalt mit n + p Blöcken wiederhergestellt werden kann, wobei n und p natürliche Ganzzahlen ungleich Null sind, wobei n Blöcke im Push-Modus heruntergeladen und p Blöcke durch einen Peer-t-Peer-Mechanismus im Pull-Modus heruntergeladen werden, wobei der multimediale Inhalt erst nach Empfang der n + p Blöcke verwertet werden kann.
